# EUROPEAN PATENT APPLICATION

(11) **EP 1 132 797 A2**
(43) Date of publication of application: **12.09.2001**
(21) Application number: 00109549.6
(22) Date of filing: 04.05.2000
(51) Int. Cl.: G06F 1/00

(54) **Method for securing user identification in on-line transaction systems**

(30) Priority: 08.03.2000 US 187927 P
(71) Applicant: Aurora Wireless Technologies, Ltd., Yung-ho City, Taipei Hsien (TW)
(72) Inventor: Luz, Maria Camacho, Orlando, FL (US); Pirkey, Roger D., Lake Mary, FL 32746 (US)
(74) Representative: Viering, Jentschura & Partner

(57) **Abstract**

A distributed Personal Digital Identification (PDI) system and architecture rapidly verifies individuals using biometrics data or other tags prior to approving a transaction and/or granting accesses to an on-line service. The architecture that includes a server that has access to data required to authenticate an individual, and the processing capacity to route authenticated requests to the appropriate downstream entity (Internet Service Provider, Credit Card Company, etc.). The server is connected to requesting users by various network methods to form client/server architecture. The server and clients each contain discrete subsystems, which provide various levels of authentication services to users of the system.

## Description

### BACKGROUND OF THE INVENTION

### 1. Field of the Invention

The present invention relates to data communications and e-commerce, and more particularly, to a method and apparatus for detecting and reducing fraudulent access of on-line services and bank accounts using personal digital identification such as imaged fingerprints or tags.

### 2. Description of the Related Art

With the growing use of the Internet and the concurrent increase of e-commerce, purchases of goods and services that are conducted without an individual present to show identification will also increase. Access to on-line accounts is also granted without the presence of an individual to confirm or authenticate the accessing user.

With over 40 million web users, the increase of credit card fraud over the Internet is increasing. Many measures are in place to protect the issuing banks and consumers against fraud. Unfortunately, hackers, scam artists, and criminals can always find a weak link. Such criminals typically exploit that weak link until the industry catches up. After the industry stops one leak, another leak is discovered and exploited.

Employee abuse of company resources is also rising, as access by employees to the Internet using company equipment is readily available in most companies. Although not all employees abuse Internet service, cumulatively much time and resources are taken away from an employer.

Supervision of children's on-line activities is also a concern for all parents. Although there are many "parent control" software products available on the market, most reside directly on the PC and can be turned off at any time by either the minor or the parent.

Subscription/account fraud is also growing rapidly. The exchange of account information among individuals is decreasing the revenues received by Internet Service Providers (ISPs). In addition to lost revenue on subscriptions that are not paid for comes the requirement for additional capacity to support authorized and unauthorized users accessing ISP services.

In addition to lost revenue from unauthorized "subscribers," ISPs have other concerns. Many ISPs host web pages. One potential problem is if an intruder gains access to the host, the intruder may be able to change information on the host's web page, thus possibly subjecting the ISP to further liability. Moreover, an intruder could use a public web site as an entry point into a company's internal files and gain access to confidential information such as competitively sensitive business information or information about the company's clients and/or employees that could be protected by privacy laws. This could be particularly serious for an ISP that is also a cable company, which maintains extensive customer data. A related problem, referred to as a "Trojan Horse," occurs when an intruder enters an ISP web site with the intention of gaining unauthorized access to other computer systems by concealing his/her true identity by use of the web site. Once again, potential ISP liability arises if the intruder launches his or her attack from the ISP's web site.

As for what an ISP can do to protect against Internet fraud, the efforts that an ISP can undertake range from common-sense precautions to reporting suspicious activity to the FBI. Among conventional methods are: posting a log-in banner that warns unauthorized users that they may be subject to monitoring; using audit trails within the computer network; keystroke level monitoring; caller identification; establishing internal passwords and changing them frequently; installing anti-virus software on every PC; installing "firewall" software; making back-ups of any damaged or altered files; maintaining old back-ups to demonstrate the status of the original; designating one person to secure potential evidence of fraudulent activity; establishing procedures to secure tape back-ups and print-outs.

All the conventional methods for reducing fraud have drawbacks and limitations. Primarily, firewalls and other logins and passwords do not protect against unauthorized access where the thief already knows account information and passwords. Similarly, post-hoc fraud detection procedures can only be effective if the unauthorized user can be found and prosecuted.

Accordingly, there remains a need in the art for proactively reducing on-line fraud where the requesting individual is not known or physically present. The present invention fulfills this need, among others.

### SUMMARY OF THE INVENTION

Accordingly, an object of the present invention is to overcome the above-described limitations and problems of the prior art.

Another object of the invention is to reduce unauthorized access to on-line services.

Another object of the invention is prevent unauthorized access to on-line services before any access is permitted.

Another object of the invention is to permit more effective oversight by parents and employers over on-line activities of children and employees.

Another object of the invention is to prevent on-line fraud and theft.

Another object of the invention is to make e-commerce and on-line access more secure.

Another object of the invention is to more effectively control access to services over data communications networks such as the Internet.

Another object of the invention is to provide more effective authentication of individuals requesting access to services and resources over data communications networks such as the Internet.

Another object of the invention is to detect fraudulent or suspicious on-line activity.

To achieve these objects and others, the present invention provides for a distributed Personal Digital Identification (PDI) system and architecture to rapidly verify individuals using biometrics data or other tags prior to approving a transaction and/or granting accesses to a service. The present invention provides an architecture that includes a server that has access to data required to authenticate an individual, and the processing capacity to route authenticated requests to the appropriate downstream entity (Internet Service Provider, Credit Card Company, etc.). The server is connected to requesting users by various network methods to form client/server architecture. The server and clients each contain discrete subsystems, which provide various levels of authentication services to users of the system.

### BRIEF DESCRIPTION OF THE DRAWINGS

These and other objects and advantages of the present invention, along with the best mode for practicing it, will become apparent to those skilled in the art after considering the following detailed specification, together with the accompanying drawings wherein:
FIG. 1 is a block diagram illustrating an exemplary implementation of the present invention;
FIG. 2 illustrates the components a personal digital identification system in accordance with a preferred embodiment of the present invention;
FIG. 3 illustrates the components of a client used by users to request services in accordance with the present invention;
FIG. 4 is a flowchart illustrating a method implemented by the PDI system of the present invention; and
FIGs. 5 - 7 are flowcharts further illustrating the processing steps depicted in FIG. 4.

### DETAILED DESCRIPTION OF THE INVENTION

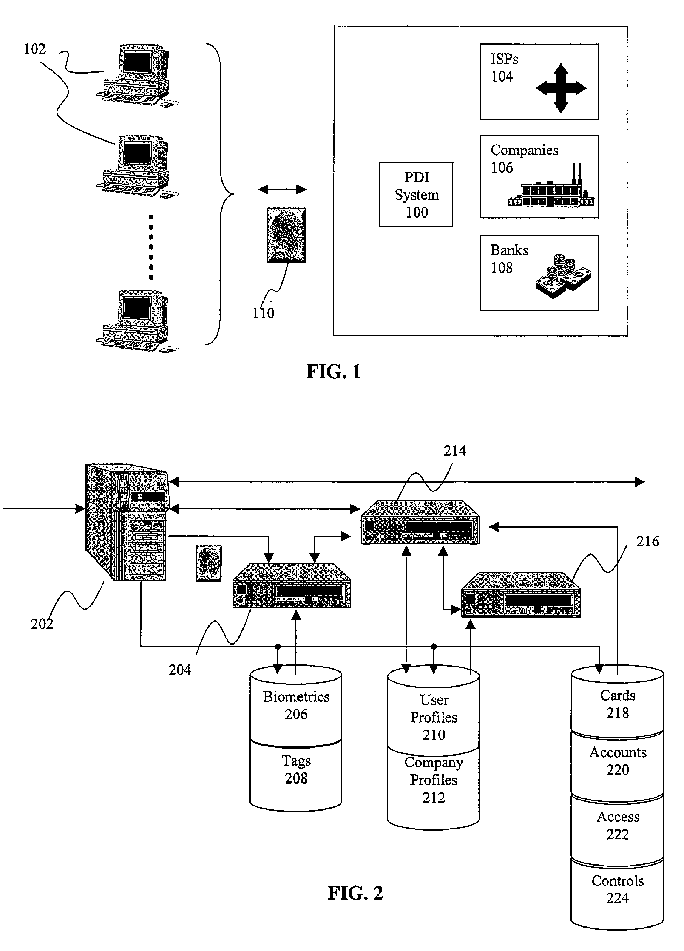

FIG. 1 illustrates an exemplary implementation of the present invention.

As shown in FIG. 1, the PDI system 100 of the present invention interacts with persons using clients 102 who seek access to resources of providers such as ISPs 104, companies 106 and banks 108, and in some cases requires such persons to provide unique personal identification information 110 such as fingerprints or tags before permitting such access. When necessary, the PDI system authenticates the user's personal identification before granting access or approving a transaction, thus protecting service providers from fraud or misuse by unauthorized individuals. Although the unique personal identification will be described below as primarily digital in nature, the architecture can be applicable to analog authentication methods as well.

As will be described in more detail below, whereas conventional methods use post-hoc artificial intelligence or tracking procedures to determine when an account is potentially associated with fraud or abnormal behavior, if at all, the PDI system of the present invention uses a combination of fraud behavior detection measures and identification verification measures to pre-emptively authenticate a purchase or access to service. For example, purchases over the Internet that are to be paid for using credit cards issued by banks may require PDI verification 100% of the time due to the inability to verify users with mere account information. Alternatively, the PDI system 100 can generate a list of known purchase points (web sites) associated with a cardholder, and when those sites are used the cardholder is NOT prompted to enter a PDI, because that is part of the cardholder's profile. Whereas, if the cardholder requests a purchase at a different site that is NOT part of the cardholder's profile, the cardholder will be prompted to enter the PDI along with their name, address, and credit card information as a means of ensuring and verifying that the credit card belongs to the holder.

PDI system 100 can also maintain lists aside from the cardholder's own PDI Profile, such as "PDI ALWAYS" lists, which include sites that have been identified has having been associated with fraud in the past. Purchases from such sites must therefore always be verified using PDI information, regardless of the cardholder requesting a purchase. Other lists, such as "PDI NEVER" lists, contain information about sites that are considered secure and typically not associated with suspicious activity.

PDI system 100 further provides pre-emptive security for issuing banks and Internet Service Providers (ISP). For example, if an account is being used fraudulently, the individual committing fraud may have access to the account holder's name, address, etc., which information is typically all that is used to allow on-line use of the credit card. Another case is that of "Account" information shared among multiple individuals. For example, an individual who subscribes to a service that requires a login and password may share the login and password among several individuals who now use the service without paying. The provider of the service then collects on only one account instead of several.

As will be described in more detail below, the PDI system 100 preferably includes a facility/server which provides PDI services and methods in accordance with the invention that protect credit card holders and issuing banks against unauthorized purchases, and particularly purchases over the Internet. The PDI system also preferably includes a database that contains unique identifying information about credit card holders, which database is secured using various encryption methods to protect against internal fraud. Conventional information can also be stored such as contact information and credit card numbers, which can also be encrypted to protect against potential internal fraud activities. Although not described in detail hereinbelow, it should be understood that the PDI system of the invention can further include means to collect and process transaction information and to build user profiles, company profiles, and default profiles.

The PDI system 100 is ordinarily located at a remote location relative to the clients 102 and can provide a centralized source of authentication for users that operate the clients 102 to seek access to resources of services 104, 106 and 108. Alternatively, the system can reside upon company premises or be centralized to provide service bureau services. Although system 100 is shown separately from ISPs 104, companies 106 and banks 108 for clarity of the invention, it should be understood that the service of the present invention can be integrated within existing firewall and/or policy server functionalities of such ISPs, companies and banks, or can be provided as a remotely located front end or back end to such functionalities.

Further, although the PDI system 100 is described herein as supporting ISPs 104, companies 106, and card issuers such as banks 108, and other organizations that may require additional security and protection of data and transactions, the present invention is not limited to this particular system 100, and may be readily adapted to provide PDI services for other organizations or for use in other applications that require individual identity authentication to limit misuse or protect services.

FIG. 2 further illustrates an example of a PDI system 100 in accordance with the principles of the present invention. As shown in FIG. 2, the PDI system 100 includes a server 202 that communicates with one or more distributed clients 102, and with ISPs 104, company servers 106, and banking institutions 108, a matching subsystem 204, a biometrics database 206, a tags database 208, a user profile database 210, a company profile database 212, a controller subsystem 214, a fraud behavior subsystem 216, a cards database 218, an accounts database 220, an access database 222 and a controls database 224. The various components of system 100 can be interconnected by a network such as a LAN or WAN. System 100, clients 102, ISPs 104, company servers 106 and banking institutions 108 are interconnected by way of a data communications network such as a LAN, a WAN, or the Internet.

Server 202 provides the system 100 with the capability to interface with external systems using known protocols and data formats such as TCP/IP, http, html, etc. Server 202 can be implemented by many conventional web servers, and a detailed description thereof is not necessary for an understanding of the present invention.

Matching subsystem 204 verifies the identity of individuals requesting services prior to granting access or approving transactions. Matching subsystem 204 preferably includes a biometrics and/or tags matching capability that rapidly searches for stored data in the biometrics database 206 and/or tags database 208, and compares the stored data with data provided by users making requests for services. Matching subsystem 204 can be implemented by, for example, a PC and dedicated application software that is interconnected with the other subsystems of system 100. For example, where the biometrics data used with the present invention is fingerprint data, the matching subsystem can include proprietary fingerprint retrieval and matching products such as the AFIS system from Cogent Systems, Inc., FingerPrinter CMS System from Digital Biometrics, and fingerprint recognition software from Pollex Technology, Ltd. and DigitalPersona, Inc.

Although shown and described below separately for clarity, the various databases 206, 208, 210, 212, 218, 220, 222, and 224 can be provided together as a single indexed database and can be managed by a database management system such as that provided by Oracle. Such a database management subsystem preferably provides process management functionality and includes the hardware and software to coordinate system and user transactions, scheduling, routing, synchronization, and execution (search, enroll and verification).

Biometrics database 206 and tags database 208 contain information that is used to authenticate the user of an account. Biometrics data can be any physical characteristic such as fingerprints, voice patterns, eye patterns (retina or iris), face patterns (e.g. infrared or optical), handwriting. Tags data represent other features that can be detected and used to identify a person within an acceptable level of certainty, such as keystroke entry patterns, gait, modus operandi profiles, etc. According to an aspect of the invention, these biometrics and/or tags are collected and stored for every user.

Biometrics and tags data such as fingerprints are unique, and that makes them ideal for personal digital identification. Moreover, unlike passwords, PIN codes and smartcards, biometrics and tags are impossible to lose or forget, and they can never be stolen. Further, although fingerprints have been used for centuries for identification, as far back as ancient China, and are generally associated with painstaking analysis, with technological advances today there are many commercially available products to cheaply and rapidly acquire, store and verify fingerprints.

User profile database 210 can contain identification information about users, along with their usage of accounts. A user profile preferably contains usage information such as location (i.e. where does the user typically use the service), whether and how often the user travels, whether in travel mode does the user's usage pattern differ from the user's home patterns, the normal usage and/or transaction amounts associated with the user, whether the account ever used to receive moneys from an ATM, and if so how often, whether the user uses the Internet for purchases, and if so, what sites does he typically go to. As will be described in more detail below user profiles can be used to determine when authentication is required, especially when making purchases over the Internet or out of profile purchases. This provides an added level of security for issuing banks, and is information that is not typically found in a lost wallet, stolen mail, etc. When a credit card is being used fraudulently, the individual committing the fraud has access to the holder's name, address, etc., which information is typically the only information used to verify the credit card. Moreover, most Internet purchases currently allow an individual to make a purchase without presenting some type of verification. Profiles can thus be used to determine when a PDI is required when making purchases over the Internet.

Company profile database 212 can contain company information that is used to determine when a transaction requires authentication by the account holder. As will be described in more detail below, the company profile database can include lists of sites that "always" require a PDI, "never" require a PDI, or always "deny" the transaction and ask the account holder to use a different means of making the purchase, whether by check or asking to speak with a customer representative.

Fraud detection subsystem 216 detects behaviors and circumstances that are indicative of fraudulent or suspicious activities. Such behaviors can include activity that is indicative of an account that is being used at the same time by different users. For example, fraud detection subsystem can detect a collision -- when two accounts are used at the same time from two different locations -- or a velocity violation -- when two accounts are used at two locations where the intervening distance can not be traveled in the elapsed time between purchases. Where IP addresses, billing addresses, phone numbers, names, etc. of accounts are known to have been associated with account fraud in the past, such information can be used to pre-emptively trigger fraudulent or suspect activity. Fraud detection subsystem 216 can be implemented by, for example, a PC and dedicated application software that is interconnected with the other subsystems of system 100.

Controller subsystem 214 provides the ability to further control access to services by users that are granted access to service after authentication. This provides ISPs 104, company servers 106, and banking institutions 108 a mechanism to ensure that only authorized individuals are granted access or transactions approved providing the ability to determine true bandwidth requirements and control misuse of services. Fraud detection subsystem 216 can be implemented by, for example, a PC and dedicated application software that is interconnected with the other subsystems of system 100.

As shown in FIG. 2, controller subsystem 214 provides an interface between the clients 102 and the various subsystems of system 100. Specifically, the controller subsystem 214 maintains context and routes transaction requests made by the clients 102 and dispatches those requests to the appropriate subsystem of system 100. In addition, the controller subsystem 214 provides database transaction and system management functionality to ensure database concurrency, synchronization, and efficient load balancing of system resources.

As will be described in more detail below, controller subsystem 214 also provides additional control over the use of resources in accordance with information stored in cards database 218, accounts database 220, access database 222 and controls database 224. For example, sub-account holder information can be used to control, limit, and restrict access by certain individuals to web sites or controlled areas. For example, a parent may create a credit card sub-account for a child which contains a dollar limit per day, per transaction, per vendor/vendor type. As another example, an ISP account may contain "parent control" or "employer control" functionality that limits access to the Internet.

Cards database 218 contains restriction information about bank cards and allows card companies to verify the user of the card prior to approving a transaction, especially over the Internet. Such restrictions can include limits on purchase based on various business rules or customer requirements.

Accounts database 220 provides Internet Service Providers, web site providers, and subscription organizations a mechanism to ensure that account information (e.g. login and password) is not shared and is only used by the authorized individual. This limits the number of accounts that are shared by individuals, thus providing an accurate representation of the number of billable accounts for service providers. Guest Accounts can be established to provide access from other locations, and information about such accesses can be captured and incorporated into the account holder profile. This also provides a mechanism to identify individuals that are constantly accessing services without subscribing to services. The information can be used to deny access.

Access database 222 allows ISPs and organizations to limit access to company servers and restrict access based on account information.

Controls database 224 allows accounts to be established with limited access to services, sites, etc. This provides parent control capabilities, employee control to minimize abuse by employees.

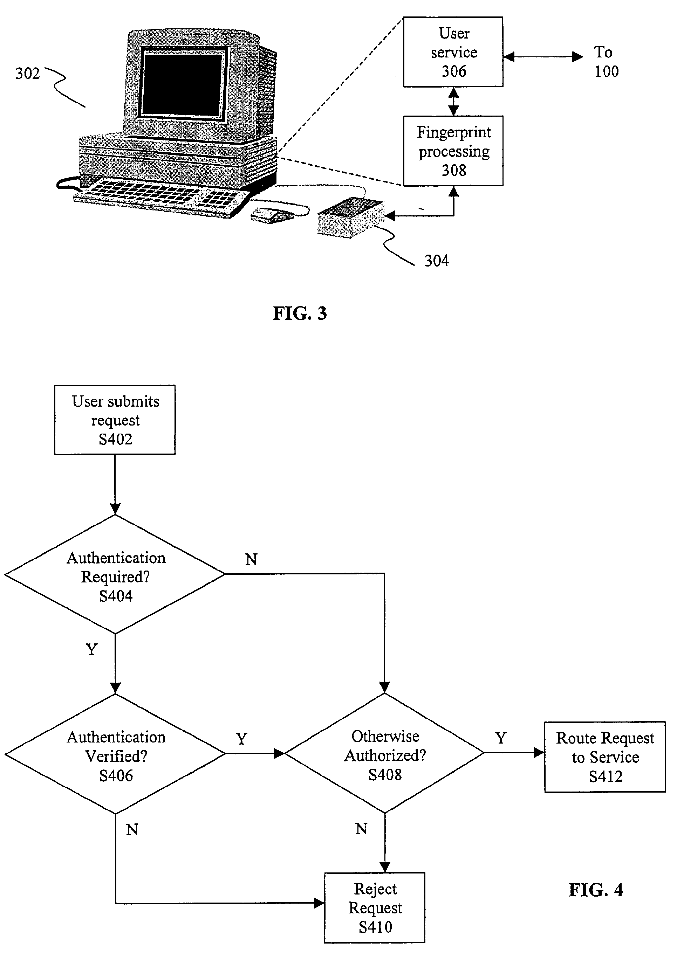

FIG. 3 illustrates an example of a client 102 that can be used in the PDI system architecture of the present invention. As shown in FIG. 3, according to this example, client 102 includes a workstation 302, and a biometrics capture device 304. As further shown in FIG. 3, workstation 302 includes a user service subsystem 306 and a biometrics processing subsystem 308.

Clients 102 enable users to submit identification data with appropriate hardware and software requirements to the PDI system 100 for authentication services. Requests may include adding an individual to a database 210, capturing and processing biometrics data, such as obtaining fingerprint images. Client 102 and server 202 interact using known data communication network protocols such as http and messages formatted in html. Client requests can be initiated by clicking or entering a url in a browser, for example. The actual protocols and formats are considered an implementation detail and are not necessary for an understanding of the present invention.

Workstation 302 is preferably a PC or other type of computer that includes a data communications access device such as a modem. It should be understood that many alternatives to workstation 302 are possible, and can include all computing devices that are or can be used to communicate and conduct e-commerce transactions over communications networks, such computing devices including laptops, palm and handheld computers, smart phones, ATMs, etc.

User service subsystem 306 and a biometrics processing subsystem 308 are preferably software applications executing on a processor incorporated in workstation 302, the design and implementation of which are not necessary for an understanding of the present invention. Nevertheless, it should be noted that user service subsystem 306 is implemented as a plug-in application to conventional browser applications such as Internet Explorer. In the example of the invention where fingerprints are used as biometric data, biometrics capture device 304 and processing subsystem 306 are implemented by fingerprint capture software products from such vendors as DigitalPersona and Pollex Technology, Ltd.

FIG. 4 illustrates the top-level flow of processing by PDI system 100. As shown in FIG. 4, in step S402 client 102 submits a user request to system 100 for resources from services 104, 106 and 108. A user request may contain information such as the requesting user's name or other identifier, the type of request (e.g. purchase, access, etc.), the service required (identifier of ISP 104, company 106 or bank 108), an account or card number to bill for or permit the service, and the location where the request is being forwarded from. Further, the user request may already contain a PDI, such as a fingerprint image. The user request may be encrypted depending on implementation. Further depending on implementation, software and/or hardware of the client 102 may process and transform the user request before forwarding the request to the PDI system 100. In step S404, system 100 determines whether the request requires authentication. If so, system 100 requires client 102 to collect and forward biometric and/or other digital tags and content (if not received already with the request), and upon its receipt forwards the biometrics and/or tags to the appropriate subsystem for authentication (step S406). If authentication is verified or unnecessary, further processing may be performed to determine whether the request is in accordance with profiles stored in databases 210 and 212, or if authorizations are required and satisfied in accordance with parameters established in databases 218, 220, 222 and 224 (step S408). If the request is properly authenticated and authorized, the request is routed to the appropriate destination (104, 106, or 108) in step S412. If authentication is not verified or if access is otherwise unauthorized, the request is rejected and may or may not be returned to the client 102 (step S410).

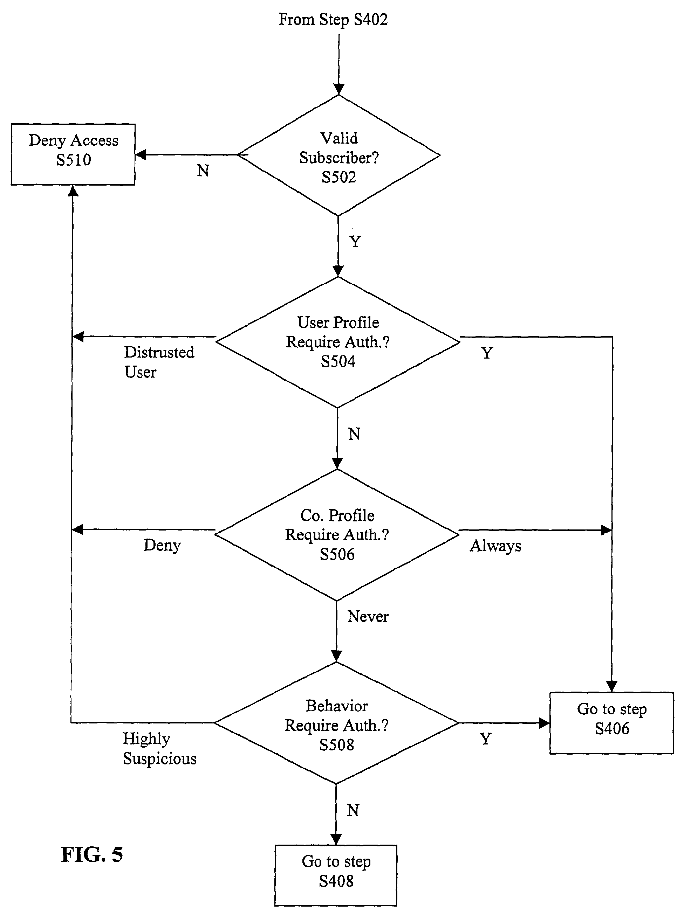

FIGs. 5 to 7 illustrate the above processing of PDI system 100 in even more detail.

FIG. 5 further illustrates the process of determining whether authentication is required such as that performed in step S404 in FIG. 4

As shown in FIG. 5, user requests received in step S402 are routed to server 202 via implementation-specific methods. In step S502, server 202 ensures the request is properly formatted and rejects the request if not in the proper format (i.e. the actual representation of the data as it is transmitted over the network). Server 202 further determines whether the request R1 is a candidate for further processing, i.e. if the request is from a valid subscriber. This can be determined, for example, by controller subsystem 214 searching for associated information for the user in user profiles database 210. If the request is not from a valid subscriber, the request is denied without further processing (step S510). Alternatively, a dialog session can be initiated for signing up the user and collecting their PDI, and then continuing on to step S408.

If it is determined that the request is from a valid subscriber, then processing continues to step S504, where system 100 determines whether the user's profile requires that the request be authenticated. For example, the user's profile in database 210 can include a list of known purchase points (web sites) associated with a user's credit card, and controller 214 can retrieve this list by indexing the database according to the user's identity and the card number included in the request. When the user is requesting a purchase from those known sites, the user is NOT prompted to enter a PDI, because that request fits the cardholder's profile. Whereas, if the user's request seeks to use the credit card for a purchase at a different site that is not part of the cardholder's profile, the cardholder will be prompted to enter the PDI, possibly along with their name, address, and credit card information as a means of ensuring and verifying that the credit card belongs to the requesting user. The user profile may also include a field that indicates that the user cannot be trusted for any transaction, and thus the request for services can be denied without any further processing (step S510).

As further shown in FIG. 5, even if the user's own profile does not require authentication, processing advances to step S506. In this step, system 100 determines whether the service from whom access is requested requires that the user provide authentication.

This step can be performed, for example, by controller subsystem 214 retrieving and inspecting the company profile for the requested service (104, 106 or 108) stored in company profiles database 212. In one example of the invention, the profile for each participating service includes three tables, a "never" table, a "deny" table, and an "always" table. Controller 214 first compares the user's request the "never" table, which table lists users for which the service does not require any authentication. If the user is listed in the "never" table, no authentication is required and processing skips to step S508.

Otherwise, controller 214 further compares the user making the request to entries in the service's "deny" table. The "deny" table contains entries of users that the service has deemed should never be permitted access, even with authentication. If the user making this request is listed in the "deny" table, access is denied without any further processing (step S510).

Finally, if the user is not listed in the service's "allow" or "deny" tables, controller 214 further determines if the user making the request is listed in the service's "always" table. The "always" table lists user's from whom authentication is always required. If the user is listed in the "always" table, processing advances to step S406. Otherwise, processing advances to step S508.

In step S508, system 100 determines whether the request is indicative of fraudulent behavior so as to require the user to provide authentication.

For example, certain cards and accounts may require authentication of certain users in order for requested use to be authorized (e.g. a parent can grant access to children for use of the parent's credit card, but only with authentication). Accordingly, in this step, controller subsystem 214 looks up the card or account number contained in the request in databases 218 and 220, and determines whether the user must provide authentication. If so, processing advances to step S406. Alternatively, the card or account number can have a field indicating that the requesting user should never be allowed to use the card or account, and so access can be denied without any further processing (step S510).

Otherwise, processing continues by determining whether the requested use is indicative of fraudulent behavior. For example, processing can be performed by fraud detection subsystem 216 to determine if the current request is a duplicate, i.e. a Collision Violation has occurred. A Collision Violation is a user request from the same user that is received from two distinct locations with an overlapping time between the two requests. Fraud detection subsystem 216 determines from account activity information recorded in user profiles database 210 whether the user associated with the current request is also currently making another request from a different location, the request results in a Collision Violation. The requesting user may be required to either provide identification (step S406) or access may be immediately denied (step S510).

In another example, the fraud detection subsystem 216 can determine if the request triggers a Velocity Violation. Velocity violations are two requests from the same user made from two distinct locations with an intervening distance that is not possible to achieve based on the time difference. Accordingly, fraud detection subsystem 216 determines from account activity information recorded in user profiles database 210 whether the user associated with the current request has made another request from a different location that cannot be traveled in time difference between the requests, the request results in a Velocity Violation. The requesting user may be required to either provide identification (step S406) or access may be immediately denied (step S510).

Fraud detection subsystem 214 can further determine if any Customized Triggers have been violated. Customized Triggers are established by the service and stored in company profiles database 212. They can be, for example, an e-commerce transaction that is placed and shipped to a different address other than the billing address of the card holder, and more than "n" purchases placed in a specified period of time, access attempts from various locations during a specified time frame, or more than a specified number of incorrect attempts to access services. Accordingly, fraud detection subsystem 214 retrieves this information in accordance with the request and processes it for all users seeking access to the service. If the user request results in a Customized Trigger Violation, depending on the instructions in company profiles database 212, the requesting user may be required to either provide identification (step S406) or access may be immediately denied without further processing (step S510).

It should be noted that account activity information contained in the user profiles database 210 can be updated with each request, and used for further analysis as well as future predictive analysis and intelligent marketing. Controller subsystem 214 can perform this updating and further make the activity information in user profiles database 210 accessible to services 104, 106 and 108 (as well as to other third parties such as advertisers and marketers) via a client that resides at their location. Moreover, all user profiles that have been flagged for suspicious activity can be reported to the company for additional investigation and proper company policies.

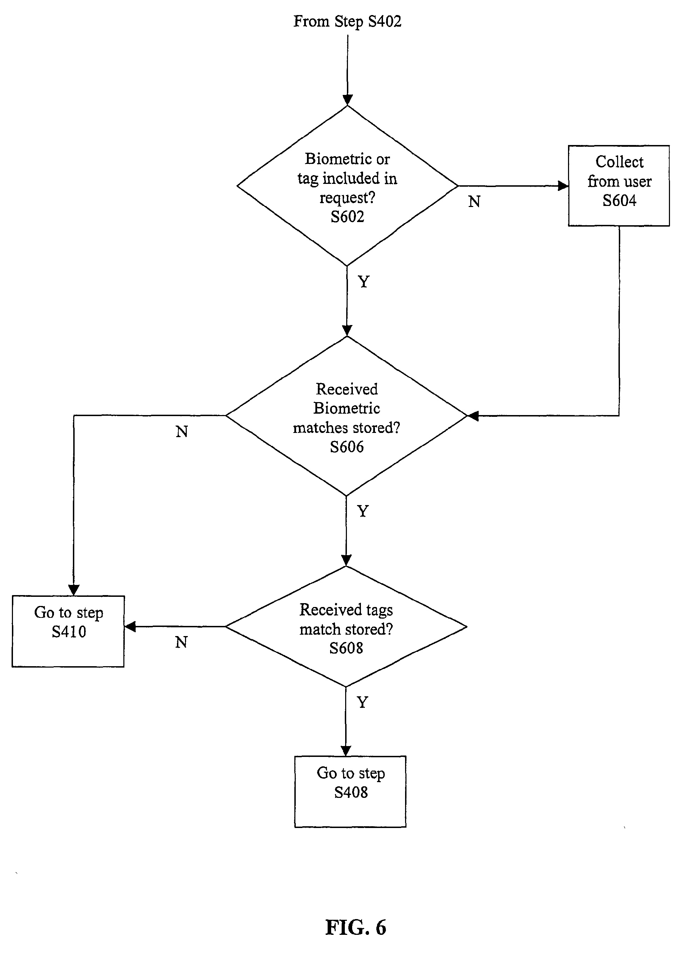

FIG. 6 further illustrates the process of authenticating a user requesting services based on biometrics or tags such as that performed in step S406 in FIG. 4.

As shown in FIG. 6, if biometric or tags data was already included in the request (determined in step S602), processing advances to step S606. Otherwise, controller 214 instructs server 202 to request the client 102 to collect and forward the biometric and/or tags data (step S604).

In step S606, matching subsystem 204 compares the collected biometric data from the user making the request against the stored biometric in biometrics database 206. If the biometric data does not match, the requested is denied and processing skips to step S410.

In one example of the invention, matching subsystem 204 further (or alternatively) compares collected tags data from the user making the request against stored tags data in tags database 208 for that user. If the tags data does not match, the requested is denied and processing skips to step S410.

If collected biometric and/or tags data matches the data stored for that user, PDI authentication is verified and processing advances to step S408.

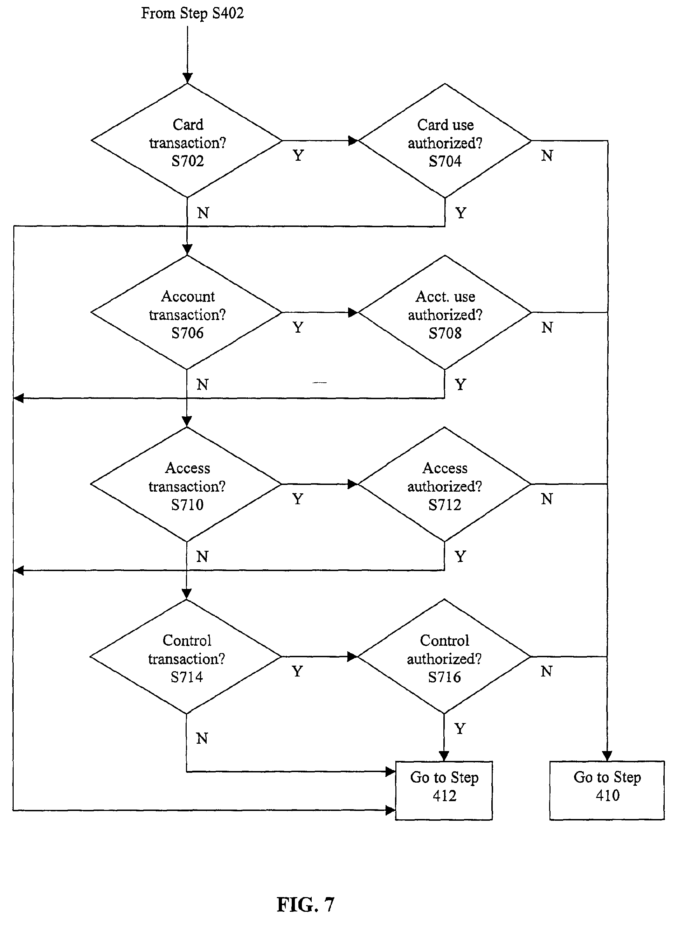

FIG. 7 further illustrates the process of determining whether a user request is otherwise authorized such as that performed in step S408 in FIG. 4.

System 100 first determines whether the user's request is for a "card" transaction, e.g. the use of a credit card for a purchase (step S702). If so, controller subsystem 214 next determines from records stored in cards database 218 whether restrictions have been applied to use of the card associated with the request based on amount, destination, or location of purchase (step S704). For example, a parent may issue a card to child with restrictions applied. These restrictions can be on the type of goods to be purchased such as "school supplies, medical, etc." or can be in the form of purchase limits. If restrictions exist and are satisfied for this request, the request is authorized and processing advances to step S412. Otherwise, if the restrictions are not satisfied, the transaction is denied and processing proceeds to step S410.

As further shown in FIG. 7, if the request is not for a "card" transaction, system 100 next determines whether the request is for an "account" transaction, e.g. the use of an ISP account (step S706). If so, controller subsystem 214 next determines from records stored in accounts database 220 whether restrictions have been applied to use of the account associated with the request based on frequency of access, time of day, etc. (step S708). If restrictions exist and are satisfied for this request, the request is authorized and processing advances to step S412. Otherwise, if the restrictions are not satisfied, the transaction is denied and processing proceeds to step S410.

As further shown in FIG. 7, if the request is not for an "account" transaction, system 100 next determines whether the request is for an "access" transaction, e.g. the use of a company's intranet or database (step S710). If so, controller subsystem 214 next determines from records stored in access database 222 whether restrictions have been applied to use of the resources associated with the request (step S712). For example, certain companies can have separate lists of resources to which either unlimited or only limited access is permitted. If the request is for a resource to which unlimited access is permitted, access is authorized and processing advances to step S412. If controller 214 determines from database 222 that the request is for a Limited Access resource, the restrictions for the resource are retrieved. These restrictions can be limited site access, download, ftp, and update capabilities, etc. As long as the request is confined to the restrictions, processing advances to step S412. Otherwise, the request is denied and processing proceeds to step S410.

As shown in FIG. 7, if the request is not for an "access" transaction, system 100 further determines if the request requires a "control" transaction (step S714). For example, the controls database 224 may contain Parent Controls and Other Controls. A Parent control transaction is restrictions that are applied to the request depending on the user. These restrictions can be sites visited, use of a card at certain locations, etc. If a Parent Control transaction is required for this user, controller 214 retrieves the restrictions from controls database 224 and determines whether this request is within the restrictions (step S716). If so, processing advances to step S412. Otherwise, the request is denied and processing proceeds to step S410.

If the request does not trigger a Parent Control transaction, it still might trigger an Other Control transaction. An Other Control transaction allows employers, companies, or appropriate personnel to apply restrictions of the use of their computers. These restriction could be "only certain business sites, no chat rooms, etc." These restrictions allow Companies to control and minimize employee abuse. For these transactions, controller 214 retrieves the restrictions from controls database 224 and determines whether the request is within the restrictions. If so, processing advances to step S412. Otherwise, the request is denied and processing proceeds to step S410.

The above processing is meant to be illustrative rather than limiting. Those skilled in the art, after being taught by the above examples, will appreciate that many modifications can be made to the above methods, including substitution, elimination, consolidation and re-ordering of many process steps, while keeping within the scope and purpose of the present invention.

Although the present invention has been described in detail with reference to the preferred embodiments thereof, those skilled in the art will appreciate that various substitutions and modifications can be made to the examples described herein while remaining within the spirit and scope of the invention as defined in the appended claims.

## Claims

1. A method for reducing the occurrence of unauthorized use of on-line resources, comprising:
receiving a message indicating a request from a user to use on-line resources;
determining whether the request requires authentication;
obtaining an indicia of physical identification from the user if authentication is required;
comparing the obtained indicia to a stored indicia for the user; and
enabling the request if the obtained indicia matches the stored indicia.

2. A method according to claim 1, wherein the step of determining whether the request requires authentication includes determining whether a stored profile for the user indicates that authentication is required.

3. A method according to claim 1, wherein the step of determining whether the request requires authentication includes determining whether a stored profile for a company associated with the requested on-line resource indicates that authentication for the user is required.

4. A method according to claim 3, wherein the step of determining whether the stored company profile requires authentication includes:
determining whether the user is listed by the company as always requiring authentication; and
requiring authentication if the user is listed.

5. A method according to claim 3, wherein the step of determining whether the stored company profile requires authentication includes:
determining whether the user is listed by the company as never requiring authentication; and
not requiring authentication if the user is listed.

6. A method according to claim 3, wherein the step of determining whether the stored company profile requires authentication includes:
determining whether the user is listed by the company as being completely denied access; and
completely denying access to the requested on-line resources if the user is listed.

7. A method according to claim 1, wherein the step of determining whether the request requires authentication includes determining whether the request is indicative of fraudulent behavior.

8. A method according to claim 7, wherein the fraudulent behavior is one or more of a collision violation, a velocity violation, and a customized trigger.

9. A method according to claim 1, further comprising determining whether the request satisfies other criteria of authorization if authentication is not required.

10. A method according to claim 9, wherein the step of determining whether the request satisfies other criteria includes:
determining whether the request is a card transaction;
determining whether restrictions applied to the user and an account associated with the request are satisfied by a purchase associated with the request; and
denying the request if the restrictions are not satisfied.

11. A method according to claim 10, wherein the restrictions are one or more of type of goods to be purchased, amount of purchase, time of purchase and location of purchase.

12. A method according to claim 9, wherein the step of determining whether the request satisfies other criteria includes:
determining whether the request is an account transaction;
determining whether restrictions applied to an account associated with the account transaction are satisfied by the request; and
denying the request if the restrictions are not satisfied.

13. A method according to claim 12, wherein the restrictions are one or more of frequency of access and time of access.

14. A method according to claim 9, wherein the step of determining whether the request satisfies other criteria includes:
determining whether the request is an account transaction;
determining whether use of the requested on-line resources are restricted for an account associated with the user; and
denying the request if the requested on-line resources are restricted for the account.

15. A method according to claim 9, wherein the step of determining whether the request satisfies other criteria includes:
determining whether the request is a control transaction;
determining whether restrictions applied to the user associated with the card transaction are satisfied by the request; and
denying the request if the restrictions are not satisfied.

16. A method according to claim 15, wherein the restrictions are one or more of a parent control and an other control.

17. A method according to claim 1, wherein the indicia is a biometric.

18. A method according to claim 17, wherein the biometric is one or more of a fingerprint, a voiceprint, a palmprint, an eye scan, and a handwriting sample.

19. A method according to claim 1, wherein the indicia is a tag.

20. An apparatus for reducing the occurrence of unauthorized use of on-line resources, comprising:
means for receiving a message indicating a request from a user to use on-line resources;
means for determining whether the request requires authentication;
means for obtaining an indicia of physical identification from the user if authentication is required;
means for comparing the obtained indicia to a stored indicia for the user; and
means for enabling the request if the obtained indicia matches the stored indicia.

21. An apparatus according to claim 20, wherein the means for determining whether the request requires authentication includes means for determining whether a stored profile for the user indicates that authentication is required.

22. An apparatus according to claim 20, wherein the means for determining whether the request requires authentication includes means for determining whether a stored profile for a company associated with the requested on-line resource indicates that authentication for the user is required.

23. An apparatus according to claim 22, wherein the means for determining whether the stored company profile requires authentication includes:
means for determining whether the user is listed by the company as always requiring authentication; and
means for requiring authentication if the user is listed.

24. An apparatus according to claim 22, wherein the means for determining whether the stored company profile requires authentication includes:
means for determining whether the user is listed by the company as never requiring authentication; and
means for not requiring authentication if the user is listed.

25. An apparatus according to claim 22, wherein the means for determining whether the stored company profile requires authentication includes:
means for determining whether the user is listed by the company as being completely denied access; and
means for completely denying access to the requested on-line resources if the user is listed.

26. An apparatus according to claim 20, wherein the means for determining whether the request requires authentication includes means for determining whether the request is indicative of fraudulent behavior.

27. An apparatus according to claim 26, wherein the fraudulent behavior is one or more of a collision violation, a velocity violation, and a customized trigger.

28. An apparatus according to claim 20, further comprising means for determining whether the request satisfies other criteria of authorization if authentication is not required.

29. An apparatus according to claim 28, wherein the means for determining whether the request satisfies other criteria includes:
means for determining whether the request is a card transaction;
means for determining whether restrictions applied to the user and an account associated with the request are satisfied by a purchase associated with the request; and
means for denying the request if the restrictions are not satisfied.

30. An apparatus according to claim 29, wherein the restrictions are one or more of type of goods to be purchased, amount of purchase, time of purchase and location of purchase.

31. An apparatus according to claim 28, wherein the means for determining whether the request satisfies other criteria includes:
means for determining whether the request is an account transaction;
means for determining whether restrictions applied to an account associated with the account transaction are satisfied by the request; and
means for denying the request if the restrictions are not satisfied.

32. An apparatus according to claim 31, wherein the restrictions are one or more of frequency of access and time of access.

33. An apparatus according to claim 28, wherein the means for determining whether the request satisfies other criteria includes:
means for determining whether the request is an account transaction;
means for determining whether use of the requested on-line resources are restricted for an account associated with the user; and
means for denying the request if the requested on-line resources are restricted for the account.

34. An apparatus according to claim 28, wherein the means for determining whether the request satisfies other criteria includes:
means for determining whether the request is a control transaction;
means for determining whether restrictions applied to the user associated with the card transaction are satisfied by the request; and
means for denying the request if the restrictions are not satisfied.

35. An apparatus according to claim 34, wherein the restrictions are one or more of a parent control and an other control.

36. An apparatus according to claim 20, wherein the indicia is a biometric.

37. An apparatus according to claim 36, wherein the biometric is one or more of a fingerprint, a voiceprint, a palmprint, an eye scan, and a handwriting sample.

38. An apparatus according to claim 20, wherein the indicia is a tag.

39. An apparatus for reducing the occurrence of unauthorized use of on-line resources, comprising:
a server that is adapted to communicate with users so as to receive a message indicating a request from a user to use on-line resources;
a controller coupled to the server that determines whether the request requires authentication, and causes the server to obtain an indicia of physical identification from the user if authentication is required; and
a matching subsystem coupled to the server and the controller that compares the obtained indicia to a stored indicia for the user,
wherein the controller enables the request if the matching subsystem determines that the obtained indicia matches the stored indicia.

40. An apparatus according to claim 39, further comprising a user profiles database coupled to the controller, the controller accessing records from the user profiles database to determine whether authentication is required for the user.

41. An apparatus according to claim 39, further comprising a company profiles database coupled to the controller, the controller accessing records from the company profiles database to determine whether a company associated with the requested on-line resource requires authentication for the user.

42. An apparatus according to claim 39, further comprising a fraud behavior detection subsystem coupled to the controller which is adapted to determe whether the request is indicative of fraudulent behavior.

43. An apparatus according to claim 42, wherein the fraudulent behavior is one or more of a collision violation, a velocity violation, and a customized trigger.

44. An apparatus according to claim 39, wherein the indicia is a biometric, the apparatus further comprising a biometrics database that stores a plurality of biometrics for a respective plurality of users.

45. An apparatus according to claim 44, wherein the biometric is one or more of a fingerprint, a voiceprint, a palmprint, an eye scan, and a handwriting sample.

46. An apparatus according to claim 39, wherein the indicia is a tag, the apparatus further comprising a tags database that stores a plurality of tags for a respective plurality of users.
